(19) Europäisches Patentamt / European Patent Office / Office européen des brevets

(11) **EP 3 009 315 B1**

(12) **EUROPEAN PATENT SPECIFICATION**

(45) Date of publication and mention
of the grant of the patent:
**24.04.2019 Bulletin 2019/17**

(51) Int Cl.:
**B60T 13/14** *(2006.01)* **B60T 11/20** *(2006.01)*
**B60T 11/21** *(2006.01)* **B62D 11/08** *(2006.01)*

(21) Application number: **15189387.2**

(22) Date of filing: **12.10.2015**

(54) **DEVICE AND METHOD FOR ADJUSTING/REDUCING PRESSURE FOR SERVO CONTROLLED BRAKES**

SYSTEM UND VERFAHREN ZUR DRUCKINSTELLUNG IN SERVO-BREMSEINRICHTUNGEN

SYSTÈME ET PROCÉDÉ DE REGOLATION DE LA PRESSION DU SERVOFREIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.10.2014 IT TO20140837**

(43) Date of publication of application:
**20.04.2016 Bulletin 2016/16**

(73) Proprietor: **VHIT S.p.A.
26010 Offanengo (CR) (IT)**

(72) Inventor: **CADEDDU, Leonardo
26010 Offanengo (CR) (IT)**

(74) Representative: **Robba, Pierpaolo
Interpatent S.R.L.
Via Caboto, 35
10129 Torino (IT)**

(56) References cited:
EP-A2- 1 366 652       WO-A1-2010/112949
WO-A2-2009/090078    DE-A1- 4 009 147
DE-A1-102011 085 881  GB-A- 2 168 442
US-A- 3 019 816        US-A- 3 760 841
US-A- 3 773 362        US-A- 4 893 878

## Description

*Technical Field*

The present invention generally relates to a device for and a method of adjusting/reducing pressure to be applied to servo controlled brakes.

More particularly, the present invention relates to a device for adjusting/reducing pressure for braking systems of agricultural vehicles or the like, in which two "hydroboost" servo master cylinders are provided in order to control braking, even independent, of rear brakes of the vehicle.

*Prior Art*

Braking systems for agricultural vehicles or the like, such as earth movers and so on, are commonly known.

Such braking systems include for instance, besides two pedals and two respective master cylinders containing pressurised fluid, also balancing circuits, referred to as "pressure-controlled" or "stroke-controlled" circuits depending on their respective structures, which circuits are arranged to balance braking pressures in both master cylinders when the pedals are simultaneously operated.

An example of braking system for agricultural vehicles or the like, with a stroke-controlled balancing, is disclosed for instance in International publication WO 2009/077190 A2 in the name of the Applicant.

In general, braking systems for agricultural vehicles are associated, for instance, with hydraulic circuits under pressure intended to support, besides the braking systems, also a number of services available in the vehicle.

In accordance with the prior art, the pressure existing in hydroboost master cylinders of servo controlled brakes can vary, for instance, in a range from 20 to 25 bars, depending on the services being used by the vehicle.

This gives rise to the problem that the master cylinders, and hence the braking system, are subjected to pressure variations, or servo pressure variations, which, as time goes by, can damage to the braking system itself.

Servo controlled braking systems for agricultural vehicles also include a pressure-limiting device, as disclosed for instance in international publication WO 2012/035498 A2 in the name of the Applicant, where, *inter alia,* also a pressure-controlled balancing is disclosed.

Document WO 2010/112949 A1 discloses a valve assembly for hydraulic braking system, comprising twin valve arrangements arrangements, each having a spool with a passageway for providing a modulation of the pressure applied to the brakes.

Document WO 2009/090078 A2 discloses a braking device comprising a hydrobooster supplied by a source of high pressure fluid which is also used for operating additional security functions such as ABS or ESP. Documents US 3,760,841 A DE 102011085881 A1 disclose vehicle hydraulic brake systems comprising valve configured to provide reduced pressures.

The prior art device does not include any device for adjusting/reducing the servo pressure.

Generally speaking, the Applicant has noticed that the braking systems in accordance with the prior art fail to effectively solve the problem of the servo pressure variations in agricultural vehicles or the like.

The Applicant has also noticed that the braking systems in accordance with the prior art have some problems when the maximum servo pressure exceeds admissible maximum values.

*Description of the Invention*

It is an object of the present invention to solve, in particular, the problem of the servo pressure variations in agricultural vehicles or the like.

It is another object of the present invention to solve the problem of the limitation of the maximum servo pressure while simultaneously solving the problem of the servo pressure variations.

The above objects are achieved through the device for servo controlled brakes having the features set forth in the appended claims.

The present invention also concerns a method of adjusting/reducing pressure for servo controlled brakes

The claims are integral part of the technical teaching provided herein in respect of the invention.

The following synthetic description of the invention is given in order to provide a basic understanding of some aspects of the invention.

This synthetic description is not an exhaustive description and, as such, it is not intended as being suitable for identifying key or critical elements of the invention, or for defining the object of the invention. It only aims at setting forth some concepts of the invention in simplified form, as an anticipation of the detailed description included below.

In accordance with a feature of a preferred embodiment, the device for adjusting/reducing pressure (adjusting device) for servo controlled brakes includes a piston arranged to slide inside a volume having two different bores, arranged to determine a predetermined pressure adjustment/reduction ratio between the pressure of the incoming fluid and the pressure of the outgoing fluid.

In accordance with another feature of the present invention, the piston is connected to a preloaded spring arranged to make a linear sliding of the piston easier.

In accordance with a further feature of the present invention, the adjusting device is internally equipped with a safety device arranged to discharge the pressure of the incoming fluid when a predetermined maximum threshold value is exceeded.

*Brief Description of the Figures*

The above and other features and advantages of the present invention will become apparent from the following description of a preferred embodiment, made by way of non limiting example with reference to the accompanying drawings, in which elements denoted by a same or similar reference numeral correspond to components having the same or similar function and construction, and in which:

- Fig. 1 is a plan view of a braking system including two master cylinders; and
  Fig. 2 is vertical sectional view, taken along line B - B in Fig. 1, showing a device for adjusting the servo pressure integrated with a device for limiting the maximum servo pressure.

*Detailed Description of a Preferred Embodiment*

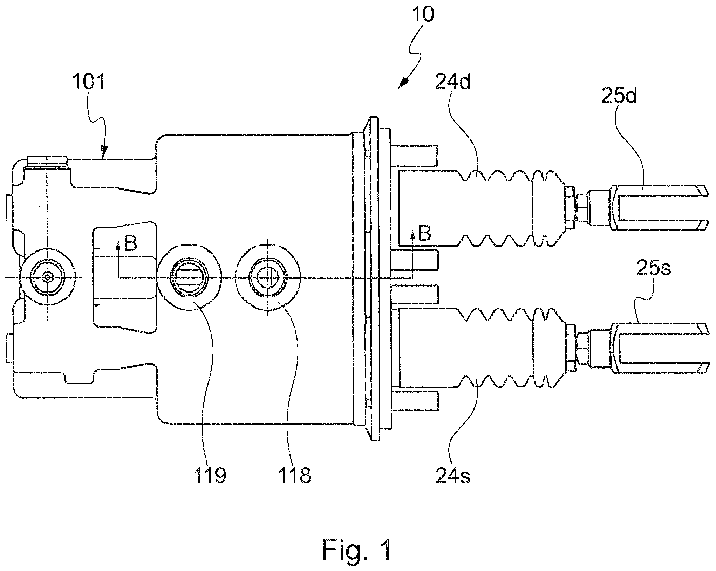

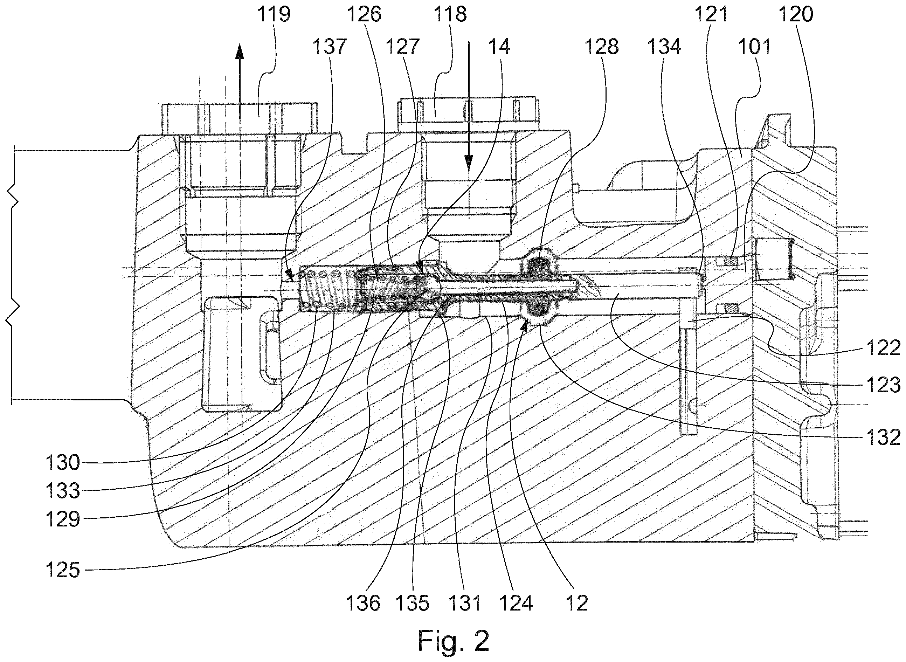

Referring to Fig. 1, there is shown a servo controlled braking system 10, which, in the preferred embodiment, internally includes, within a single housing or body 101, two "hydroboost" master cylinders and a device 12 (Fig. 1, Fig. 2) for adjusting/reducing servo pressure values (pressure adjusting device).

A channel 118 for feeding the servo brake, or inlet channel for servo oil, a discharge or outlet channel 119 for the servo oil and a further channel, for instance for controlling trailer brakes, are formed on a top surface of housing 101.

Protection casings 24S, 24D are fastened at one end of housing 101, externally thereof, and such casings are equipped, at a freed end, with fastening means 25S, 25D for fastening brake actuating pedals.

Adjusting device 12 is connected, in known manner, for instance through one or more pipes 122 of known type, to suitable hydrodynamic servo chambers for the hydrostatic "hydroboost" master cylinders, in order to provide a servo-control for the braking.

In the preferred embodiment, adjusting device 12 (Fig. 2) includes a piston/valve (piston) 123 arranged, for instance, orthogonally to inlet channel (inlet) 118 and having, for instance, a stem 124 with two gaskets, for instance O-rings, arranged upstream and downstream of inlet channel 118, respectively (at the left and the right of the inlet channel in Fig. 2).

Piston 123 has at a first end, preferably upstream of the inlet channel, a cup 129 for abutment of a spring, and a first end of an adjustment spring (spring) 130, preferably preloaded in predetermined manner at the assembly, is mounted on said cup. A second end of piston 123 is configured so as to abut, in known manner, against an abutment 134 formed in body 101 and including, for instance, a cap 120 with an associated gasket 121.

In the preferred embodiment, a second end of spring 130 abuts against body 101 in correspondence with a discharge pipe 137 connected to discharge channel 119, and it is arranged to allow a reciprocating linear motion of the piston.

In the preferred embodiment, piston 123 is configured so as to be slidable, in use, inside a volume having a first bore 131 having a cross-section with a first area S1, a groove 132 in proximal position with respect to gasket 128, and a second bore 133 having a cross-section with a second area S2 in a zone located in correspondence of gasket 127 arranged to provide tightness against the second bore 133.

Preferably, area S1 of the first bore 131 is greater than area S2 of the second bore 133, and the ratio between the two areas or surfaces is defined in the design phase so as to determine, as it will be described below, a predetermined adjustment/reduction ratio of the pressure values upstream/downstream of adjusting device 12.

The operation of adjusting device 12 is as follows.

Actuating oil or pressurised fluid coming for instance from a hydraulic pump, for instance associated with an accumulator, arrives through inlet channel 118. The pressurised fluid passes into the hydrodynamic servo chambers through bore 131, groove 132 and pipes 122 arranged downstream of inlet channel 118.

When the pressure value, or the pressure of the incoming fluid, by acting onto the area of bore 133 upstream of inlet channel 118, generates a force exceeding the predetermined pre-load value of spring 30, piston 123, by sliding, leaves abutment 134 and moves in the upstream direction, or to the left with reference to Fig. 2, until it intercepts the first bore 131 by means of gasket 128 and stops the pressure increase downstream of gasket 128.

A further increase in the pressure incoming through inlet channel 118 will cause an increase in the pressure on gasket 128 downstream of the inlet channel. Such an increase will be equal to the ratio between the areas of the first and second bores 131, 133, so that piston 123 is made to move in the downstream direction, or to the right with reference to Fig. 2. Such a situation is also favoured in that bore 133 is directed towards discharge pipe 137, in which the pressure approximately corresponds to atmospheric pressure, which forms for instance a setting reference therefor.

By summarising, the behaviour of the pressure incoming through the inlet channel is arranged to start a reciprocating motion of piston 123 inside the volume, thereby selectively opening and closing the hydraulic connection between inlet channel 118 and outlet pipe (outlet) 122, also thanks to the connection of the piston with the preloaded resilient member.

Through simple mathematical passages, it can be easily demonstrated that the equation of the adjustment/reduction ratio of the pressure outgoing through pipes 122 downstream of the adjusting device is:

$$((S1-S2)/(S1)) \times 100,$$

where:

S1 is the area of the first bore 131, and
S2 is the area of the second bore 133.

From the above considerations it ensues that, by suitably dimensioning the ratio between the areas of the first bore 131 and the second bore 133, it is possible to adjust the behaviour of the outlet servo pressure as the inlet pressure varies.

Moreover, by suitably dimensioning the ratio between the areas of the first bore 131 and the second bore 133, it is also possible to reduce the variations of the outlet pressure relative to the variations of the inlet pressure.

Experimentally, the Applicant has noticed that a reduction of the variations of the outlet pressure in the range, for instance, of 10 to 20% with respect to the variations of the inlet pressure, may be considered as preferable.

A reduction of the variations of the outlet pressure for instance by about 15% with respect to the variations of the inlet pressure, may be considered still more preferable.

The possibility of reducing the variations of the pressure incoming through channel 118 is particularly useful if adjusting device 12, in accordance with the present invention, is applied to servo controlled braking systems 10 including, for each master cylinder, a pre-filling device arranged, as known, to predispose the braking system to braking, by supplying the brakes, through the master cylinder, previously to the actual braking, with a pre-filling pressure having a predetermined value, usually a medium/low pressure value.

For instance, if the variations of the pressure incoming through channel 118 lie within a range of 5 bars, the variations of the pressure outgoing through pipes 122 may lie, in the conditions considered as more preferable, within a range of 0.75 bars. Those variations are such as to ensure, as experimentally noticed by the Applicant, an effective recovery of pressure drops in the braking system due for instance to losses in the same system, for instance downstream of pipes 122, and a more homogeneous operation of the pre-filling device.

The optimal values of reduction of the pressure variations proposed herein are suggested since the Applicant has also experimentally noticed that reductions of the pressure variations lower than 10% may be such that they do not allow an effective recovery of pressure drops, if any, in the braking system due for instance, as indicated before, to losses in the same system downstream of pipes 122.

In accordance with the preferred embodiment, adjusting device 12 is also associated with a pressure limiting device (safety device) 14 arranged to limit the pressure outgoing through pipes 122 in case the pressure of the fluid downstream of feeding channel 118 exceeds a predetermined maximum value.

In accordance with the example shown in Fig. 2, safety device 14 is substantially provided inside adjusting device 12, and it includes a pipe 136, formed inside piston 123 and fluidically communicating with the pressurised fluid downstream of feeding channel 118.

In accordance with the example, safety device 14 further includes, inside piston 123, in the left portion thereof referring to Fig. 2, a ball 125 cooperating with a spring (safety spring) 126, retained by cup 129.

Preferably, safety spring 126 is preloaded so as to form a non-return valve with a predefined load, determined by the preload.

Lastly, safety device 14 includes a shoulder 135, for instance a ring-shaped shoulder, formed externally of piston 123 and arranged to abut against body 101 of braking system 10 in case the fluid downstream of feeding channel 118, in pipe(s) 122, attains the maximum servo pressure.

The operation of safety valve 14 is as follows.

In a first step, upon attainment of the predetermined maximum value of the pressure of the fluid downstream of inlet channel 118, piston 123 definitively overcomes the load of adjustment spring 130 and comes into abutment against body 101 through shoulder 135.

Then, through pipe 136, once the load of safety spring 126 cooperating with ball 125 has been overcome, the pressure increase is stopped when the predetermined maximum threshold value is exceeded, and the excess fluid is discharged through discharge pipe 137 and discharge channel 119.

The safety function accomplished by safety valve 14 is intended to avoid breakages, caused by fluid overpressures, inside the hydroboost servo cylinders, when the fluid undergoes strong temperature increases and consequently strong volume increases while being not used by the brakes, this being a situation typical of a standing vehicle where the engine is running in order to actuate operating machines, such as water-scooping machines and so on.

By summarising, the temperature increases can give rise to increases in the volume (and hence in the pressure) of the fluid in pipe(s) 122 and, consequently, can give rise to failures in braking system 10, which failures can only be prevented by a safety valve, such as for instance the valve described herein.

The invention has been described with reference to braking systems including two master cylinders, but, as it can be easily understood, it can also be applied to servo controlled braking systems for agricultural vehicles or the like including a single servo cylinder with an associated master cylinder.

Of course, obvious changes and/or modifications to the above description in respect of the shape, the components and the connections, as well as in respect of the details of the illustrated construction and the operating manner, are possible without departing from the scope of the invention as defined in the following claims.

**Claims**

1. A pressure adjustment/reduction device having an inlet connected to a channel (118) for supplying servo oil for a braking system (10), and arranged to provide at its outlet an adjusted/reduced pressure to be supplied to servo chambers of master cylinders of servo controlled brakes, said device including, within a body (101):

    - a piston (123) arranged to slide internally of a volume of which an inlet is said inlet channel (118) arranged to supply pressurised fluid, and an outlet is at least one outlet pipe (122) arranged to transfer said fluid to said servo chambers;

    wherein said volume comprises:

    - a first bore (131) having a section with a first area (S1) where, in use, said piston is arranged to slide;
    - a second bore (133) having a section with a second area (S2) where, in use, said piston is arranged to sealingly slide;

    the device being **characterised in that** said piston (123) is arranged to slide, depending on the pressurised fluid supplied by the inlet channel (118), between a rest position, in which said inlet channel (118) and said at least one outlet pipe (122) are in hydraulic connection through said first bore (131), and a final position, in which said hydraulic connection between said inlet channel (118) and said at least one outlet pipe (122) is interrupted;
    and **in that** said first bore (131), said second bore (133) and said inlet channel (118) are hydraulically connected when said hydraulic connection between said inlet channel (118) and said at least one outlet channel (122) is interrupted, so that the pressurised fluid supplied by said inlet channel (118) acts onto both said first area (S1) of said first bore (131) and said second area (S2) of said second bore (133), said first area (S1) being greater than said second area (S2) according to a predetermined ratio that is arranged to define a predetermined pressure reduction ratio between the pressure of the fluid incoming through said inlet channel (118) and the pressure of the fluid exiting through said at least one outlet pipe (122).

2. The pressure adjustment/reduction device according to claim 1, wherein:

    - said first bore (131) is connected, when the piston (123) is in the rest position, to said at least one outlet pipe (122) through a groove (132);
    - said piston (123) comprises a gasket (128) positioned, when the piston (123) is in the rest position, at said groove (132) and arranged to be sealingly engaged, in use, by said piston (123) when said piston (123) slides from the rest position to the final position, in which said gasket (128) intercepts said first bore (131), so as to interrupt the hydraulic connection between said inlet channel (118) and said at least one outlet pipe (122).

3. The pressure adjustment/reduction device according to claim 1 or 2, wherein:

    - said piston (123) is connected, inside said second bore (133), to a preloaded spring (130) arranged to rest on said body (101) so as to resiliently act on said piston for facilitating a linear sliding of said piston (123) inside said volume.

4. The pressure adjustment/reduction device according to any one of claims 1 to 3, further including, inside said pressure adjustment/reduction device (12), a safety device (14) including:

    - a non-return valve (125, 126) arranged to discharge the fluid, through a discharge pipe (137) provided inside said body (101), when a predefined maximum threshold value of the fluid pressure is exceeded inside said at least one outlet pipe (122).

5. The pressure adjustment/reduction device according to claim 4, wherein said safety device (14) includes:

    - a pipe (136) formed inside said piston (123), and fluidically communicating with the pressurised fluid present inside said at least one outlet pipe (122);

    and wherein said non-return valve includes:

    - a ball (125) cooperating with a safety spring (126) and arranged to discharge, through the discharge pipe (137), the pressurised fluid present inside said at least one outlet pipe (122) when the predefined maximum threshold value is exceeded.

**6.** The pressure adjustment/reduction device according to any one of claims 4 to 5, wherein said piston (123) includes:

- a shoulder (135) arranged to abut against the body (101) when the predefined maximum threshold value of the fluid pressure is attained.

**7.** A method for applying, to at least one "hydroboost" master cylinder, predetermined pressure adjustment/reduction ratios between first pressure values applied to an inlet (118) arranged to supply pressurised fluid, and second pressure values applied to an outlet (122) arranged to provide an adjusted/reduced outlet pressure to be supplied to at least one servo chamber of said at least one master cylinder of servo controlled brakes, said method including the steps of

- providing, between said inlet (118) and said outlet (122), a volume including a first bore (131) having a section with a first area (S1) and a second bore (133) having a section with a second area (S2), said first area (S1) being greater than said second area (S2) according to a predetermined ratio;
- making a piston (123) reciprocatingly slide inside said volume from a rest position to a final position, depending on the pressure value at the inlet of said volume;
- providing an hydraulic connection between said inlet (118) and said outlet (122), through said first bore (131), when said piston (123) is in the rest position;
- interrupting the hydraulic connection between said inlet (118) and said outlet (122) when said piston in the final position;
- providing an hydraulic connection between said inlet (118), said first bore (131) and said second bore (133) when said hydraulic connection between said inlet (118) and said outlet (122) is interrupted, so that said pressurised fluid supplied by said inlet (118) acts onto both said first area (S1) of said first bore (131) and said second area (S2) of said second bore (133);
- applying pressure value variations to the outlet of said volume on the basis of the difference between the first area (S1) and the second area (S2), by selectively opening and closing the hydraulic connection between said inlet (118) and said outlet (122) by means of said step of making the piston (123) reciprocatingly slide inside said volume;

said step of applying pressure value variations to the outlet comprises the step of

- applying to the outlet (122) pressure value variations which are reduced with respect to corresponding pressure value variations at inlet (118), by means of said step of providing an hydraulic connection between said inlet (118), said first bore (131) and said second bore (133).

**8.** The method according to claim 7, wherein said step of making said piston slide includes the step of:

- facilitating the step of making the piston (123) reciprocatingly sile inside said volume through a connection of said piston (123) to a preloaded resilient element (130).

**9.** The method according to any one of claims 7 to 8, including the further step of:

- discharging the fluid from said volume when a predefined maximum threshold value of the fluid pressure inside said outlet (122) is exceeded.

**Patentansprüche**

**1.** Druckeinstellungs-/Druckreduktionsvorrichtung, die einen Einlass aufweist, der mit einem Kanal (118) zum Zuführen von Servoöl für ein Bremssystem (10) verbunden ist, und dazu angeordnet ist, an ihrem Auslass einen eingestellten/reduzierten Druck bereitzustellen, der Servokammern von Hauptzylindern von servogesteuerten Bremsen zugeführt wird, wobei die Vorrichtung innerhalb eines Körpers (101) Folgendes beinhaltet:

- einen Kolben (123), der dazu angeordnet ist, innerhalb eines Volumens zu gleiten, wovon ein Einlass der zum Zuführen von Druckfluid angeordnete Einlasskanal (118) ist und ein Auslass zumindest ein zum Übertragen des Fluids zu den Servokammern angeordnetes Auslassrohr (122) ist;

wobei das Volumen Folgendes umfasst:

- eine erste Bohrung (131) mit einem Abschnitt mit einem ersten Bereich (S1), wo im Gebrauch der Kolben zum Gleiten angeordnet ist;
- eine zweite Bohrung (133) mit einem Abschnitt mit einem zweiten Bereich (S2), wo im Gebrauch der Kolben zum dichtenden Gleiten angeordnet ist;

wobei die Vorrichtung **dadurch gekennzeichnet ist, dass** der Kolben (123) dazu angeordnet ist, in Abhängigkeit von dem durch den Einlasskanal (118) zugeführten Druckfluid zwischen einer Ruhestellung, in der sich der Einlasskanal (118) und das zumindest eine Auslassrohr (122) in hydraulischer Verbindung durch die erste Bohrung (131) befinden, und einer Endstellung, in der die hydraulische Verbindung zwischen dem Einlasskanal (118) und dem zumindest einen Auslassrohr (122) unterbrochen ist, zu gleiten; und dadurch, dass die erste Bohrung (131), die zweite Bohrung (133) und der Einlasskanal (118) hydraulisch verbunden sind, wenn die hydraulische Verbindung zwischen dem Einlasskanal (118) und dem zumindest einen Auslasskanal (122) unterbrochen ist, sodass das durch den Einlasskanal (118) zugeführte Druckfluid sowohl auf den ersten Bereich (S1) der ersten Bohrung (131) als auch auf den zweiten Bereich (S2) der zweiten Bohrung (133) wirkt, wobei der erste Bereich (S1) gemäß einem vorbestimmten Verhältnis, das dazu angeordnet ist, ein vorbestimmtes Druckreduktionsverhältnis zwischen dem Druck des durch den Einlasskanal (118) eintretenden Fluids und dem Druck des durch das zumindest eine Auslassrohr (122) austretenden Fluids zu definieren, größer als der zweite Bereich (S2) ist.

2. Druckeinstellungs-/Druckreduktionsvorrichtung nach Anspruch 1, wobei:

- wenn sich der Kolben (123) in der Ruhestellung befindet, die erste Bohrung (131) durch eine Nut (132) mit dem zumindest einen Auslassrohr (122) verbunden ist;
- der Kolben (123) eine Dichtung (128) umfasst, die, wenn sich der Kolben (123) in der Ruhestellung befindet, an der Nut (132) positioniert und dazu angeordnet ist, im Gebrauch durch den Kolben (123) dichtend in Eingriff genommen zu werden, wenn der Kolben (123) aus der Ruhestellung in die Endstellung gleitet, wobei die Dichtung (128) die erste Bohrung (131) abschneidet, um die hydraulische Verbindung zwischen dem Einlasskanal (118) und dem zumindest einen Auslassrohr (122) zu unterbrechen.

3. Druckeinstellungs-/Druckreduktionsvorrichtung nach Anspruch 1 oder 2, wobei:

- der Kolben (123) innerhalb der zweiten Bohrung (133) mit einer vorgespannten Feder (130) verbunden ist, die dazu angeordnet ist, auf dem Körper (101) aufzuliegen, um elastisch auf den Kolben einzuwirken, um ein lineares Gleiten des Kolbens (123) innerhalb des Volumens zu ermöglichen.

4. Druckeinstellungs-/Druckreduktionsvorrichtung nach einem der Ansprüche 1 bis 3, ferner beinhaltend innerhalb der Druckeinstellungs-/Druckreduktionsvorrichtung (12) eine Sicherheitsvorrichtung (14), die Folgendes beinhaltet:

- ein Rückschlagventil (125, 126), das dazu angeordnet ist, das Fluid durch ein innerhalb des Körpers (101) bereitgestelltes Ableitungsrohr (137) abzuleiten, wenn ein vordefinierter maximaler Schwellenwert des Fluiddrucks innerhalb des zumindest einen Auslassrohrs (122) überschritten wird.

5. Druckeinstellungs-/Druckreduktionsvorrichtung nach Anspruch 4, wobei die Sicherheitsvorrichtung (14) Folgendes beinhaltet:

- ein Rohr (136), das innerhalb des Kolbens (123) ausgebildet ist und mit dem innerhalb des zumindest einen Auslassrohrs (122) vorhandenen Druckfluid in Fluidverbindung steht;

und wobei das Rückschlagventil Folgendes beinhaltet:

- eine Kugel (125), die mit einer Sicherheitsfeder (126) zusammenwirkt und dazu angeordnet ist, das innerhalb des zumindest einen Auslassrohrs (122) vorhandene Druckfluid durch das Ableitungsrohr (137) abzuleiten, wenn der vordefinierte maximale Schwellenwert überschritten wird.

6. Druckeinstellungs-/Druckreduktionsvorrichtung nach Anspruch 4 bis 5, wobei der Kolben (123) Folgendes beinhaltet:

- eine Schulter (135), die dazu angeordnet ist, am Körper (101) anzuliegen, wenn der vordefinierte maximale Schwellenwert des Fluiddrucks erreicht ist.

7. Verfahren zum Anwenden, auf zumindest einen "Hydroboost"-Hauptzylinder, vorbestimmter Druckeinstell-/Druckreduktionsverhältnisse zwischen ersten Druckwerten, die auf einen Einlass (118) angewandt werden, der dazu angeordnet ist, Druckfluid zuzuführen, und zweiten Druckwerten, die auf einen Auslass (122) angewandt werden, der dazu angeordnet ist, einen eingestellten/reduzierten Auslassdruck bereitzustellen, der zumindest einer Servokammer des zumindest einen Hauptzylinders servogesteuerter Bremsen zugeführt werden soll, wobei das Verfahren die folgenden Schritte beinhaltet:

- Bereitstellen eines Volumens zwischen dem Einlass (118) und dem Auslass (122), das eine erste Bohrung (131) mit einem Abschnitt mit einem ersten Bereich (S1) und eine zweite Bohrung (133) mit einem Abschnitt mit einem zweiten Bereich (S2) beinhaltet, wobei der erste Bereich (S1) gemäß einem vorbestimmten Verhältnis größer als der zweite Bereich (S2) ist;

- Bewirken, dass ein Kolben (123) in Abhängigkeit vom Druckwert am Einlass des Volumens innerhalb des Volumens aus einer Ruhestellung in eine Endstellung hin- und hergleitet;
- Bereitstellen einer hydraulischen Verbindung zwischen dem Einlass (118) und dem Auslass (122) durch die erste Bohrung (131), wenn sich der Kolben (123) in der Ruhestellung befindet;
- Unterbrechen der hydraulischen Verbindung zwischen dem Einlass (118) und dem Auslass (122), wenn sich der Kolben in der Endstellung befindet;
- Bereitstellen einer hydraulischen Verbindung zwischen dem Einlass (118), der ersten Bohrung (131) und der zweiten Bohrung (133), wenn die hydraulische Verbindung zwischen dem Einlass (118) und dem Auslass (122) unterbrochen ist, sodass das durch den Einlass (118) zugeführte Druckfluid sowohl auf den ersten Bereich (S1) der ersten Bohrung (131) als auch auf den zweiten Bereich (S2) der zweiten Bohrung (133) wirkt;
- Anwenden von Druckwertänderungen auf den Auslass des Volumens basierend auf der Differenz zwischen dem ersten Bereich (S1) und dem zweiten Bereich (S2) durch selektives Öffnen und Schließen der hydraulischen Verbindung zwischen dem Einlass (118) und dem Auslass (122) anhand des Schritts des Bewirkens, dass der Kolben (123) innerhalb des Volumens hin- und hergleitet; wobei der Schritt des Anwendens von Druckwertänderungen auf den Auslass den folgenden Schritt umfasst:
- Anwenden von Druckwertänderungen auf den Auslass (122), die in Bezug auf entsprechende Druckwertänderungen am Einlass (118) reduziert sind, anhand des Schritts des Bereitstellens einer hydraulischen Verbindung zwischen dem Einlass (118), der ersten Bohrung (131) und der zweiten Bohrung (133).

**8.** Verfahren nach Anspruch 7, wobei der Schritt des Bewirkens, dass der Kolben gleitet, den folgenden Schritt beinhaltet:

- Ermöglichen des Schritts des Bewirkens, dass der Kolben (123) innerhalb des Volumens hin- und hergleitet, durch eine Verbindung des Kolbens (123) mit einem vorgespannten elastischen Element (130).

**9.** Verfahren nach einem der Ansprüche 7 bis 8, ferner umfassend den folgenden Schritt:

- Ableiten von Fluid aus dem Volumen, wenn ein vordefinierter maximaler Schwellenwert des Fluiddrucks innerhalb des Auslasses (122) erreicht ist.

## Revendications

**1.** Dispositif d'ajustement/de réduction de pression ayant une entrée reliée à un canal (118) pour fournir de l'huile de servocommande à un système de freinage (10), et conçu pour fournir au niveau de sa sortie une pression ajustée/réduite à fournir aux chambres de servocommande de maîtres-cylindres de servofreins, ledit dispositif comprenant, dans un corps (101) :

un piston (123) conçu pour coulisser à l'intérieur d'un volume dont une entrée est ledit canal d'entrée (118) conçu pour fournir un fluide sous pression, et une sortie est au moins un tuyau de sortie (122) conçu pour transférer ledit fluide auxdites chambres de servocommande ;
ledit volume comprenant :

un premier alésage (131) ayant une section avec une première zone (S1) où, lors de l'utilisation, ledit piston est conçu pour coulisser ;
un second alésage (133) ayant une section avec une seconde zone (S2) où, lors de l'utilisation, ledit piston est conçu pour coulisser de manière étanche ;
le dispositif étant **caractérisé en ce que** ledit piston (123) est conçu pour coulisser, en fonction du fluide sous pression fourni par le canal d'entrée (118), entre une position de repos, dans laquelle ledit canal d'entrée (118) et ledit au moins un tuyau de sortie (122) sont en liaison hydraulique par ledit premier alésage (131), et une position finale, dans laquelle ladite liaison hydraulique entre ledit canal d'entrée (118) et ledit au moins un tuyau de sortie (122) est interrompue ;
et **en ce que** ledit premier alésage (131), ledit second alésage (133) et ledit canal d'entrée (118) sont reliés hydrauliquement lorsque ladite liaison hydraulique entre ledit canal d'entrée (118) et ledit au moins un tuyau de sortie (122) est interrompue, de sorte que le fluide sous pression fourni par ledit canal d'entrée (118) agisse sur ladite première zone (S1) dudit premier alésage (131) et ladite seconde zone (S2) dudit second alésage (133),
ladite première zone (S1) étant plus grande que ladite seconde zone (S2) selon un rapport prédéfini qui est conçu pour définir un rapport de réduction de pression prédéfini entre la pression du fluide entrant par ledit canal d'entrée (118) et la pression du fluide sortant par ledit au moins un tuyau de sortie (122).

**2.** Dispositif d'ajustement/de réduction de pression selon la revendication 1, dans lequel:

> ledit premier alésage (131) est relié, lorsque le piston (123) est dans la position de repos, audit au moins un tuyau de sortie (122) par une rainure (132) ;
> ledit piston (123) comprend un joint (128) positionné, lorsque le piston (123) est dans la position de repos, au niveau de ladite rainure (132) et conçu pour venir en prise de manière étanche, lors de l'utilisation, avec ledit piston (123) lorsque ledit piston (123) coulisse de la position de repos vers la position finale, dans laquelle ledit joint (128) intercepte ledit premier alésage (131), de sorte à interrompre la liaison hydraulique entre ledit canal d'entrée (118) et ledit au moins un tuyau de sortie (122).

**3.** Dispositif d'ajustement/de réduction de pression selon la revendication 1 ou 2, dans lequel :
ledit piston (123) est relié, à l'intérieur dudit second alésage (133), à un ressort précontraint (130) conçu pour reposer sur ledit corps (101) de sorte à agir élastiquement sur ledit piston pour faciliter le coulissement linéaire dudit piston (123) dans ledit volume.

**4.** Dispositif d'ajustement/de réduction de pression selon l'une quelconque des revendications 1 à 3, comprenant en outre, à l'intérieur dudit dispositif d'ajustement/de réduction de pression (12), un dispositif de sécurité (14) comprenant :
un clapet anti-retour (125, 126) conçu pour décharger le fluide, à travers un tuyau de décharge (137) disposé à l'intérieur dudit corps (101), lorsqu'une valeur seuil maximale prédéfinie de la pression de fluide est dépassée à l'intérieur dudit au moins un tuyau de sortie (122).

**5.** Dispositif d'ajustement/de réduction de pression selon la revendication 4, ledit dispositif de sécurité (14) comprenant :

> un tuyau (136) formé à l'intérieur dudit piston (123), et en communication fluidique avec le fluide sous pression présent à l'intérieur dudit au moins un tuyau de sortie (122) ;
> et ledit clapet anti-retour comprenant :
> une bille (125) coopérant avec un ressort de sécurité (126) et conçue pour décharger, à travers le tuyau de décharge (137), le fluide sous pression présent à l'intérieur dudit au moins un tuyau de sortie (122) lorsque la valeur seuil maximale prédéfinie est dépassée.

**6.** Dispositif d'ajustement/de réduction de pression selon l'une quelconque des revendications 4 à 5, ledit piston (123) comprenant :

un épaulement (135) conçu pour venir en butée contre le corps (101) lorsque la valeur seuil maximale prédéfinie de la pression de fluide est atteinte.

**7.** Procédé pour appliquer, à au moins un maître-cylindre « hydroboost », des rapports d'ajustement/de réduction de pression prédéfinis entre des premières valeurs de pression appliquées à une entrée (118) conçue pour fournir un fluide sous pression, et des secondes valeurs de pression appliquées à une sortie (122) conçue pour fournir une pression de sortie ajustée/réduite devant être fournie à au moins une chambre de servocommande dudit au moins un maître-cylindre de servofreins, ledit procédé comprenant les étapes consistant à
fournir, entre ladite entrée (118) et ladite sortie (122), un volume comprenant un premier alésage (131) ayant une section avec une première zone (S1) et un second alésage (133) ayant une section avec une seconde zone (S2), ladite première zone (S1) étant plus grande que ladite seconde zone (S2) selon un rapport prédéfini ;
faire coulisser alternativement un piston (123) à l'intérieur dudit volume d'une position de repos à une position finale, en fonction de la valeur de pression à l'entrée dudit volume ;
fournir une liaison hydraulique entre ladite entrée (118) et ladite sortie (122), à travers ledit premier alésage (131), lorsque ledit piston (123) est dans la position de repos ;
interrompre la liaison hydraulique entre ladite entrée (118) et ladite sortie (122) lorsque ledit piston est dans la position finale ;
fournir une liaison hydraulique entre ladite entrée (118), ledit premier alésage (131) et ledit second alésage (133) lorsque ladite liaison hydraulique entre ladite entrée (118) et ladite sortie (122) est interrompue, de sorte que ledit fluide sous pression fourni par ladite entrée (118) agisse sur ladite première zone (S1) dudit premier alésage (131) et ladite seconde zone (S2) dudit second alésage (133) ;
appliquer des variations de valeur de pression à la sortie dudit volume en fonction de la différence entre la première zone (S1) et la seconde zone (S2), en ouvrant et fermant sélectivement la liaison hydraulique entre ladite entrée (118) et ladite sortie (122) au moyen de ladite étape consistant à faire coulisser le piston (123) alternativement à l'intérieur dudit volume ;
ladite application de variations de valeur de pression à la sortie comprenant l'étape consistant à
appliquer à la sortie (122) des variations de valeur de pression qui sont réduites par rapport aux variations de valeur de pression correspondantes à l'entrée (118), au moyen de ladite étape consistant à fournir une liaison hydraulique entre ladite entrée (118), ledit premier alésage (131) et ledit second alésage (133).

8. Procédé selon la revendication 7, ladite étape consistant à faire coulisser le piston comprenant l'étape consistant à :
   faciliter l'étape consistant à faire coulisser le piston (123) alternativement à l'intérieur dudit volume par une liaison dudit piston (123) à un élément élastique précontraint (130).

9. Procédé selon l'une quelconque des revendications 7 et 8, comprenant en outre l'étape consistant à :
   décharger le fluide dudit volume lorsqu'une valeur seuil maximale prédéfinie de la pression de fluide à l'intérieur de ladite sortie (122) est dépassée.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009077190 A2
- WO 2012035498 A2
- WO 2010112949 A1

- WO 2009090078 A2
- US 3760841 A
- DE 102011085881 A1